(19) Europäisches Patentamt

European Patent Office

Office européen des brevets

(11) EP 0 530 402 B1

(12) **EUROPÄISCHE PATENTSCHRIFT**

(45) Veröffentlichungstag und Bekanntmachung des Hinweises auf die Patenterteilung:
**06.03.1996 Patentblatt 1996/10**

(51) Int Cl.⁶: **C09J 167/06**, C09J 175/04

(21) Anmeldenummer: **91115138.9**

(22) Anmeldetag: **06.09.1991**

(54) **Wärmehärtbare Reaktionsklebstoffe**

Thermocurable reactive adhesive

Adhésif réactif thermodurcissable

(84) Benannte Vertragsstaaten:
**CH DE FR GB IT LI**

(43) Veröffentlichungstag der Anmeldung:
**10.03.1993 Patentblatt 1993/10**

(73) Patentinhaber: **HUBER & SUHNER AG**
**CH-8330 Pfäffikon (CH)**

(72) Erfinder:
• **Stephan, Kurt**
**CH-9100 Herisau (CH)**
• **Schmidt, Roman**
**CH-8330 Pfäffikon (CH)**

• **Widmer, Hans, Dr.**
**CH-8330 Pfäffikon (CH)**

(74) Vertreter: **Hansen, Bernd, Dr. Dipl.-Chem. et al**
**Hoffmann, Eitle & Partner**
**Patent- und Rechtsanwälte,**
**Postfach 81 04 20**
**D-81904 München (DE)**

(56) Entgegenhaltungen:
**FR-A- 1 530 819**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft einkomponentige Reaktionsklebstoffe, die durch Wärme härtbar sind. Insbesondere betrifft die Erfindung einen wärmehärtbaren Reaktionsklebstoff, der zum Verkleben von wärmeschrumpfenden Formteilen geeignet ist.

Reaktionsklebstoffe zeichnen sich dadurch aus, daß sie vor dem Abbinden als reaktionsfähige monomere oder oligomere Verbindungen vorliegen, die während des Verklebens in hochmolekulare räumlich vernetzte Polymere überführt werden. Entsprechend den möglichen Typen der Polymerisierungsreaktion teilt man die Reaktionsklebstoffe in Polymerisations-, Polyadditions- und Polykondensations-Klebstoffe ein.

Polymerisations-Klebstoffe härten durch radikalische oder ionische Polymerisation, wobei im ersten Fall die für die Reaktion notwendigen Radikale entweder durch UV-Bestrahlung oder Elektronenstrahlen, meist jedoch durch radikalbildende Katalysatoren wie Peroxide, erzeugt werden. Kalthärtende Reaktionsklebstoffe sind leicht zu verarbeiten, benötigen aber meist eine lange Aushärtzeit. Wärme- und hitzehärtbare Reaktionsklebstoffzusammensetzungen binden erst bei Temperaturen von 80 bis 200°C, liefern aber sehr hohe Klebfestigkeiten.

Bei einkomponentigen Reaktionsklebstoffen treten häufig Lagerungsprobleme auf, da die Klebstoffbestandteile im Lauf der Zeit miteinander reagieren. Abhilfe schaffen zwei- oder mehrkomponentige Klebstoffsysteme, bei denen die reaktiven Komponenten erst kurz vor dem Verkleben miteinander vermischt werden.

US-PS 45 48 992 beschreibt einen zweikomponentigen Reaktionsklebstoff, bei dem Komponente I ein acrylisches Monomer und ein organisches Peroxid, Komponente II ein acrylisches Monomer und einen Härtungsbeschleuniger enthält. Ferner ist in den Komponenten I und/oder II ein ungesättigter Polyester vorhanden.

Einkomponentige Reaktionsklebstoffe, die radikalisch abbinden, sind einfach zu handhaben aber oft nicht ausreichend lagerstabil oder nur für spezielle Anwendungen einzusetzen. EP 158-462-A2 offenbart Klebstoffzusammensetzungen, die bei Raumtemperatur aushärten, jedoch nur zum Verkleben von Metallflächen gegeneinander geeignet sind.

Typische reaktive Bestandteile eines Einkomponenten-Reaktionsklebstoffs sind ein oder mehrere langkettige ethylenisch ungesättigte Polymere, sowie niedermolekulare monomere oder oligomere Olefine, die als "Brücke" während des Abbindens die langkettigen Polymere miteinander vernetzen.

DE-OS 17 191 77 beschreibt ein wärmehärtbares Klebemittel, das auf einem Trägermaterial in Form eines wärmehärtenden Selbstklebebands vorliegt. Die wesentlichen Bestandteile dieses Klebstoffs sind ein gegen Öl widerstandsfähiges Elastomer, ein klebendmachendes Harz und als reaktive Bestandteile ein ungesättigter Polyester und ein damit polymerisierbares Lösungsmittel. Zusätzliche Bestandteile sind wahlweise ein Peroxidkatalysator oder ein Vernetzungsreagens. Als polymerisierbares Lösungsmittel wird bevorzugt ein ungesättigtes Estermonomer verwendet. Ein Teil der hier beschriebenen Klebstoffe weist den Nachteil auf, daß die Viskosität innerhalb weniger Tage stark ansteigt und die beschriebenen Eigenschaften, wie z.B. selbstklebend, verlorengehen. Der Klebstoff kann daher keinesfalls über längere Zeit gelagert werden. Die übrigen Klebstoffkombinationen härten nur sehr langsam aus und sind für eine Verwendung in einem industriellen Fertigungsprozeß ungeeignet.

Der Erfindung liegt die Aufgabe zugrunde, einen wärmehärtbaren Reaktionsklebstoff als Einkomponentensystem zur Verfügung zu stellen, der sich gegenüber bekannten Klebstoffen vor allem durch erhöhte Lagerstabilität und durch eine kurze Vernetzungszeit auszeichnet, wobei Klebrigkeit und Aktivierungstemperatur der Vernetzung frei einstellbar sind. Der Klebstoff soll insbesondere zum Verkleben wärmeschrumpfender Formteile geeignet sein.

Diese Aufgabe wird durch die in Anspruch 1 angegebene Zusammensetzung eines wärmehärtbaren Reaktionsklebstoffs gelöst.

Der Klebevorgang, d.h. die Vernetzung durch eine Polymerisationsreaktion zwischen den reaktiven Bestandteilen, wird von Radikalen, die durch Einwirkung von Wärme aus dem Härtungskatalysator freigesetzt werden, ausgelöst. Es kommt zu einer Vernetzung des ungesättigten Gerüstpolymers und des ungesättigten Polyesters, wobei der ethylenisch ungesättigte niedermolekulare Vernetzer die langkettigen Polymere unter Ausbildung intra- und insbesondere intermolekularer Brücken miteinander vernetzt.

Für das unvernetzte <u>Gerüstpolymer</u> können ein oder mehrere ethylenisch ungesättigte Elastomere, insbesondere Kautschuke oder kautschukähnliche Verbindungen verwendet werden. Eine Übersicht von erfindungsgemäß geeigneten Gerüstpolymeren gibt die folgende Liste. Die Kurzbezeichnungen sind nach der DIN/ISO-Norm 1629 aufgeführt.

M-Gruppe

Zur M-Gruppe gehören Kautschuke mit einer gesättigten Kette vom Polymethylentyp.

ACM     Copolymere aus Ethylacrylat oder anderen Acrylaten mit einem geringen Anteil eines Monomers, welcher die Vulkanisation erleichtert
ANM     Copolymere aus Ethylacrylat oder anderen Acrylaten und Acrylnitril
CM       chloriertes Polyethylen

CSM    chlorsulfoniertes Polyethylen
EPDM  Terpolymere aus Ethylen, Propylen und einem Dien mit einem ungesättigten Teil des Diens in der Seitenkette
EPM    Ethylen-Propylen-Copolymerisate
FPM    Kautschuke mit Fluor-, Fluoralkyl- oder Fluoralkoxygruppen an der Polymerkette

O-Gruppe

Zu dieser Gruppe gehören Kautschuke mit Sauerstoff in der Polymerkette.

CO     Polychlormethyloxiran (Epichlorhydrin-Kautschuke)
ECO    Copolymere aus Ethylenoxid (Oxiran) und Chlormethyloxiran (Epichlorhydrin)
GPO    Copolymere aus Propylenoxid und Allylglycidylether

Zu dieser Gruppe rechnet man auch epichlorhydrinhaltige Terpolymere wie ETER.

R-Gruppe

Die R-Gruppe ist dadurch gekennzeichnet, daß vor dem Buchstaben "R" (= rubber) ein oder mehrere Kurzzeichen für das oder die Monomere(n) eingefügt wird (werden), aus dem (denen) der Kautschuk hergestellt wurde. Der unmittelbar vor dem "R" stehende Buchstabe kennzeichnet das Diolefin, aus dem der Kautschuk hergestellt wurde. Ein Buchstabe (oder mehrere Buchstaben) vor dem Diolefin-Buchstaben kennzeichnen das oder die Comonomer(e). Für die R-Gruppe wird folgende Einteilung verwendet:

ABR     Acrylat-Butadien-Kautschuke
BR      Butadien-Kautschuke
CR      Chloropren-Kautschuke
IIR     Isobuten-Isopren-Kautschuke
IR      Isopren-Kautschuke, synthetisch
NBR     Acrylnitril-Butadien-Kautschuke
NCR     Acrylnitril-Chloropren-Kautschuke
NR      Isopren-Kautschuke (Naturkautschuke)
PBR     Vinylpyridin-Butadien-Kautschuke
SBR     Styrol-Butadien-Kautschuke
SCR     Styrol-Chloropren-Kautschuke
SIR     Styrol-Isopren-Kautschuke
NIR     Acrylnitril-Isopren-Kautschuke
PSBR    Vinylpyridin-Styrol-Butadien-Kautschuke

Carboxylgruppenhaltige Kautschuke werden durch den vorgestellten Buchstaben "X" gekennzeichnet:

XSBR   carboxylgruppenhaltige Styrol-Butadien-Kautschuke
XNBR   carboxylgruppenhaltige Acrylnitril-Butadien-Kautschuke

Kautschuke mit Halogen an der Polymerkette werden wie folgt eingeteilt:

BIIR    Brom-Isobuten-Isopren-Kautschuke
CIIR    Chlor-Isopren-Kautschuke

Q-Gruppe

Die Q-Gruppe wird dadurch gekennzeichnet, daß der Name der Substituten an der Polymerkette vor die Silicon-Bezeichnung gesetzt wird.

MFQ    Siliconkautschuke mit Methyl- und Fluor-Gruppen an der Polymerkette
MPQ    Siliconkautschuke mit Methyl- und Phenyl-Gruppen an der Polymerkette
MPVQ  Siliconkautschuke mit Methyl-, Phenyl- und Vinyl-Gruppen an der Polymerkette
MNQ    Siliconkautschuke mit ausschließlich Methyl- Gruppen an der Polymerkette, wie Polydimethyl-Siloxan
MVQ    Siliconkautschuke mit Methyl- und Vinylgruppen an der Polymerkette

U-Gruppe

Zur U-Gruppe gehören Kautschuke mit Kohlenstoff, Sauerstoff und Stickstoff in der Polymerkette.

AFMU Terpolymere aus Tetrafluorethylen, Trifluornitrosomethan und Nitroso-perfluorbuttersäure
AU     Polyesterurethan-Kautschuk
EU     Polyetherurethan-Kautschuke

Ferner sind auch die in obiger Liste nicht aufgeführten NBR-Kautschuke mit endständigen Vinyl-, Carboxyl- und Amingruppen oder Ethylenvinylacetate (EVA) geeignet.

Zusätzlich zu den ungesättigten Elastomeren können auch gesättigte Gerüstpolymere vorliegen, deren Anteil jedoch so eingestellt wird, daß sie Vernetzungszeit oder die übrigen Eigenschaften des Klebstoffs nicht beeinträchtigen.

Es ist jedoch auch möglich, zunächst in einer Vorreaktion das ungesättigte Gerüstpolymer als Reaktionsprodukt eines Hydroxylgruppen enthaltenden Elastomers mit einem Diisocyanat gesondert herzustellen. Hierzu wird eine Mischung des Hydroxylgruppen enthaltenden Elastomers und des ungesättigten Polyesters mit einem Präpolymer aus einem Diisocyanat (z.B. 4,4-Methylen-bis(phenylisocyanat) (MDI) (z.B. Desmodur$^R$ von Bayer) und Hydroxyethylmethacrylat (HEMA) umgesetzt.

Durch Reaktion der Hydroxylgruppen mit dem Diisocyanat werden gezielt Doppelbindungen eingeführt, die beim Verkleben über den Vernetzer mit dem ungesättigten Polyester reagieren können. Hierdurch wird es möglich, Gerüstpolymere mit besonderen Eigenschaften, wie z.B. hoher Kerosinbeständigkeit, zu verwenden, die sonst wegen der fehlenden reaktiven Doppelbindungen nicht einsetzbar wären. Geeignet sind vor allem hydroxylgruppenhaltige Polyesterurethane wie Desmocoll$^R$ 540 von Bayer.

Die ungesättigten Polyester werden gelöst, zähflüssig oder fest eingesetzt. Die Polyester können in styrolhaltiger, bevorzugt in styrolfreier Lösung vorliegen. Vorzugsweise sind sie aus ungesättigten mehrbasischen Carbonsäuren, z.B. Fumarsäure, Maleinsäure, Itaconsäure, Citraconsäure, Mesaconsäure und deren Anhydriden, sowie Kombinationen von ungesättigten/gesättigten mehrwertigen Carbonsäuren aufgebaut, die mit mehrwertigen Alkoholen wie Ethylen-, Propylen-, Neopentyl-1,4-Cyclohexandiolmethanol, 1,4-Butandiol, Bisphenol A usw. umgesetzt sind.

Insbesonders sind die folgenden ungesättigten Polyester geeignet:

```
Viapal R 570 G                    (Vianova)
Viapal R 495 G                    (Vianova)


  Synolite R 1835                  (DSM-Resines)
  Synolite R 9193 HV               (DSM-Resines)
  Palatal R M 610-21               (BASF)
  Crystic R 198                    (Dr. Walter Mäder)
  Haftharz LTH R                   (Hüls)
  Roskydal R 850 W                 (Bayer)
```

Als Vernetzer können Monomere oder Oligomere ungesättigter Verbindungen eingesetzt werden, die zusammen mit dem ungesättigten Gerüstpolymer und dem ungesättigten Polyester eine Polymerisierungsreaktion eingehen können. Geeignet sind ethylenisch ungesättigte Hydroxyester, Aminoamidverbindungen, Ethermonoester, Derivate des Glykols, Glycidylester einschließlich der Bisphenol A und F Derivate (z.B. Rütepoex$^R$ Harz VE 3582). Es können auch ungesättigte Oligomere von Polyurethan (PU), Epoxiden (EP) oder ungesättigte Polyester (UP), sowie Melamin verwendet werden, die zusätzlich in der Lage sind, reaktionsbeschleunigend zu wirken oder die Haftung zu verbessern. Insbesondere sind bevorzugt di-, tri- und höher funktionelle Acryl- und Methylacrylverbindungen wie Alkyl- und Arylacrylate und Methacrylate, z.B. Acrylsäure oder Methacrylsäure von Diolverbindungen des Butans bis Dodekans.

Zusätzlich können auch monofunktionelle Vernetzer vorhanden sein, wodurch bei der Vernetzungsreaktion die "Brücke" zwischen den Gerüstpolymeren und/oder ungesättigten Polyestern verlängert wird. Durch diesen Zusatz, insbesondere monomerer Acrylatverbindungen, läßt sich vor allem die Härte des vernetzten Klebstoffs einstellen.

Die Polymerisierungsreaktion wird durch einen oder mehrere zugesetzte Härtungskatalysatoren ausgelöst, die bei Wärmeeinwirkung unter Radikalbildung zerfallen.

Diese Katalysatoren sind Peroxidverbindungen, die in einem Temperaturbereich von + 60 bis + 300°C reagieren, und sind ausgewählt aus tert-Butylperbenzoat, tert-Butylpermaleinat, bis(tert-Butylperoxyisopropyl)benzol

1,1-di(tert-Butylperoxy)-3,3,5-trimethylcyclohexan,
n-Butyl-4,4-di(tert-Butylperoxy)valerat,
Ethyl-3,3-di(tert-Butylperoxy)butyrat,
3,3,6,6,9,9-Hexamethyl-1,2,4,5-Tetraoxa-cyclohexan,
2,2-bis(tert-Butylperoxy)butan (Interox$^R$ BU AL 50),
1,1-bis(tert-Butylperoxy)cyclohexan.

Auch Azoverbindungen kommen als Vernetzer in Frage, wobei es gelegentlich zu einem Aufschäumen während des Verklebens kommen kann.

Neben den vorgenannten Bestandteilen können je nach Anforderung und Verwendung weitere <u>Zusatzstoffe</u> im erfindungsgemäßen Klebstoff vorhanden sein.

Der Zusatz von Schwarzpigment ($Fe_2O_3$, z.B. Bayferrox$^R$ 318 M von Bayer) beschleunigt die Polymerisationsreaktion, wodurch kürze Vernetzungszeiten erreicht werden und bei niedrigeren Aktivierungstemperaturen gearbeitet werden kann. Im großtechnischen Einsatz kann dadurch eine deutliche Energieersparnis erreicht werden. Der Anteil von Schwarzpigment im Klebstoff liegt vorteilhaft bei ca. 0,1 bis 5,0 %, besonders bevorzugt bei ca. 1,0 bis 2,0 %. Die Lagerstabilität wird nicht beeinträchtigt.

Es können auch wie Pigmente, Ruß, Kreide oder ähnliches verwendet werden. Im speziellen Fall, z.B. bei Metallverbundmassen in der Automobilindustrie, kann die Elastizität des Klebstoffs zusätzlich durch Weichmacher, wie z.B. Mesamoll$^R$, eingestellt werden. Zur Haftvermittlung auf Glas können auch Silane zugesetzt werden.

Zur Polymerisationsbeschleunigung können auch als Zusatzstoffe bekannte Aktiviersubstanzen oder Beschleuniger in gelöster oder fester Form Verwendung finden. Besonders geeignet sind hierfür Kobaltnaphtenate, Kobaltoctoate, primäre, sekundäre und tertiäre Amine sowie Sulfimide. Die Aktiviersubstanzen werden in den technisch üblichen Konzentrationen eingesetzt.

In manchen Fällen ist es erforderlich, den erfindungsgemäßen Klebstoff in gelöster Form anzubieten, wobei sich die Wahl des Lösungsmittels nach der Polarität der verwendeten Elastomere richtet: Für stark polare Elastomere sind Keto- oder aromatische Verbindungen wie Aceton, Methylethylketon (MEK), Methylacetat, Ethylacetat, Toluol, Xylol oder Mischungen davon geeignet. Für wenig polare Elastomere sind Petrolether mit Siedegrenzbereichen 60 bis 95°C, 80 bis 110°C und 110 bis 140°C, sowie Toluol oder Xylol bevorzugt.

Der erfindungsgemäße Klebstoff kann ferner Stabilisatoren enthalten, z.B. flüssige Bisphenol A Diglycidylether (z.B. Beckopox$^R$) und Thermostabilisatoren, Kautschukalterungsmittel (z.B. Phenolabkömmlinge) bei halogenhaltigen Formulierungen, Hydrochinon oder seine Derivate als Lagerstabilisatoren für den Vernetzer. Die Stabilisatoren werden in üblicher Weise auf das Klebstoffsystem abgestimmt.

Der erfindungsgemäße Klebstoff zeichnet sich gegenüber bekannten Klebstoffzusammensetzungen durch eine deutlich erhöhte Lagerstabilität aus. Die Mindestlagerzeit des Sauerstoff durchlässig oder unter einem Luftpolster abgepackten Klebstoffs bei Raumtemperatur beträgt ein Jahr, vorzugsweise mindestens zwei Jahre. Der Klebstoff ist für die Verklebung einer Vielzahl von Werkstoffen geeignet, bevorzugt von Metall, Kunststoffen, Glas, Keramik, für nicht-poröse oder poröse Werkstoffe unter sich oder gegeneinander. Besonders bevorzugt ist der Klebstoff für das Verkleben von wärmeschrumpfenden Formteilen wie Schrumpffolien und -schläuchen, aus (peroxidisch und/oder strahlen-) vernetzten Polyolefinen gegen Metall und gegen sich selbst einsetzbar. Der Klebstoff wird aus der Lösung ein- oder beidseitig auf die zu verklebenden Werkstücke aufgetragen, oder er wird als Film, Folie, Platte, Band, Strang mit oder ohne Lösungsmittel, mit oder ohne Trägermaterial (z.B. Band oder Vlies), mit oder ohne Seele aufgebracht. Im Fall von peroxidisch oder strahlenvernetztem Polyethylen genügt meist eine einseitige Auftragung des Klebstoffs auf das Substrat.

Ein weiteres Kennzeichen des erfindungsgemäßen Klebstoffs ist seine sehr kurze Vernetzungszeit im Vergleich zu bekannten Klebern bei relativ geringer Aktivierungstemperatur, wobei die Aktivierungstemperatur sich je nach gewünschter Anwendung frei einstellen läßt. Die erzielbaren Verklebfestigkeiten liegen durchwegs über den Werten von vergleichbaren bekannten Klebern. So ist z.B. bei der Verklebung von strahlenvernetztem Polyethylen gegen Aluminium nach einer 3-minütigen Temperatureinwirkung bei 120°C die Verklebung und Vernetzung derartig fortgeschritten, daß nach 24 Stunden Lagerzeit unter Belastung Kohäsionsbruch auftritt und die Schälfestigkeit über 100 N/25 mm betragen. Bei Verklebungen von chromatisiertem Aluminium gegen sich selbst werden Zugscherwerte von 12 N/mm$^2$ erreicht.

Geeignete Kombinationen von ungesättigtem Polyester (weich und/oder fest) zum Gerüstpolymer erlauben Einstellungen des Klebstoffs von weich bis hart und stark selbstklebend bis zum blockfreien Film. Die Haftung an Substraten wird hauptsächlich mittels ungesättigtem Polyester und Vernetzer eingestellt. Die Elastizität des vernetzten Klebstoffs wird über den prozentualen Anteil und die Art des Elastomers (Gerüstpolymers) gesteuert.

Es ist zweckmäßig, die Gerüstpolymere in bestimmte Gruppen einzuordnen, die ihre Auswahl je nach Einsatz oder Anwendungsbereich des Klebstoffs erleichtern.

1. Gruppe: MFQ, MPQ, MVQ, MPVQ, AMFU, FPM

Geeignet für hochtemperaturbeständige, speziell hitzebeanspruchte Klebstoffe mit guter Alterungs- und Chemikalienbeständigkeit in Pasten-, Bänder- oder Folienform.

2. Gruppe: ACM, ANM, ABR, XSBR, XNBR, CO, ECO, ETER

Geeignet für temperaturbeständige, meist gut alterungsbeständige, ölfeste und chemikalienresistente Klebstoffe aus Lösungsmitteln, oder in Pasten-, Bänder-, Folien- oder Plattenform.

3. Gruppe: EPDM, EPM, CM, CSM, CR, NBR, NCR, SBR, SIR, NIR, PSBR, AU, EU

Geeignet für gut alterungsbeständige, zum Teil gut ölbeständige und gut wasserbeständige Klebstoffe aus Lösungsmitteln, oder in Pasten-, Bänder-, Folien- oder Plattenform ohne hohe Anforderungen an die Temperaturbeständigkeit.

4. Gruppe: Elastomere oder Kautschuke mit spezifischen Eigenschaften, z.B. IER (hohe Gasdichte); IR, NR (hohe Elastizität); BIIR und CIIR sind besonders geeignet für Verschnitte mit anderen Kautschuken.

Die folgenden ungesättigten Polyester sind mit den Kautschuken der ersten Gruppe und der zweiten Gruppe meist gut verträglich: Crystic$^R$ 198, Synolite$^R$ 9193 HV, Viapal$^R$ 570, Roskydal$^R$ 850 W.

Für die Gruppen 3 und 4 sind die oben aufgeführten ungesättigten Polyester sowie auch Haftharz LTH und Viapal$^R$ 495 G besonders verträglich. Leichte Unverträglichkeitserscheinungen können eventuell über den Vernetzer ausgeglichen werden, dies gilt besonders für gelöste Kombinationen.

Für die Herstellung des erfindungsgemäßen Klebstoffs, insbesondere im Hinblick auf die Verträglichkeit der Kombinationen von Gerüstpolymeren zu ungesättigten Polyestern und Vernetzern, sind folgende Punkte zu beachten:

Ethylacrylatpolymere mit Hydroxylgruppen (ACM-Gruppe) sind mehr mit niedrigmolekularen ungesättigten Polyestern verträglich, zu niedrigmolekularen Vernetzern besteht keine Einschränkung in der Verträglichkeit. Die Kombination von chlorsulfoniertem Polyethylen (BSM-Gruppe) mit folgenden ungesättigen Polymeren ist besonders gut verträglich: Crystic$^R$ 198, Viapal$^R$ 570 G oder Roskydal$^R$ 850 W. Gute Verträglichkeit besteht auch mit niedrigmolekularen Vernetzern. Ähnliches gilt auch für Verbindungen der CM-Gruppe.

Epichlorhydrinkautschuke der Gruppe CO lassen sich besonders gut mit niedrigmolekularen ungesättigten Polyestern wie Roskydal$^R$ 850 W oder auch mit Crystic$^R$ 198 und Haftharz LPM$^R$ kombinieren. Gute Verträglichkeiten bestehen auch mit den niedrigmolekularen Vernetzern.

Nitrilkautschuke, Kautschuke der Gruppe NBR und XNBR sind in der Regel mit folgenden ungesättigten Polyestern verträglich: Crystic$^R$ 198, Synolite$^R$ 9193 HV, Viapal$^R$ 570 G und Roskydal$^R$ 850 W. Keine Einschränkung besteht auch bei der Kombination mit niedrigmolekularen Vernetzern. Polyurethankautschuke der Gruppe AU sind aufgrund ihrer Polarität nur mit wenigen Polyestern verträglich, gut kombinierbar sind jedoch diese Elastomere mit Crystic$^R$ 198, Synolite$^R$ 9193 HV. Die Vernetzer sind meist gut verträglich.

Polychloroprene der Gruppe CR lassen sich gut mit Synolite$^R$ 9193 HV und dem Haftharz LTH$^R$ kombinieren. Es besteht eine breite Verträglichkeit mit den niedrigmolekularen Vernetzern.

Die Erweichungspunkte der ungesättigten Polyester haben ebenfalls einen Einfluß auf die Klebrigkeit des Klebstoffs und die Auswahl der verwendeten Polyester wird die auf spezielle Anwendung abgestimmt. Ungesättigte Polyester mit einem Erweichungsintervall von 25 bis 60°C, eventuell kombiniert mit höhererweichenden Polyestern, sind besonders für selbstklebende Einstellungen geeignet. Ungesättigte Polyester mit einem Erweichungspunkt von 60 bis 100°C eignen sich für weniger klebrige Klebstoffeinstellungen mit Aktiviertemperaturen von 80 bis 120°C. Ungesättigte Polyester mit einem Schmelzpunkt über 100°C lassen sich vorzugsweise für trockene Filme, Folien und Bänder, deren Aktiviertemperatur über 120°C liegt, einsetzen. Die Haftung wird beispielsweise über freie Carboxylgruppen erzielt, die Härte und Temperaturbeständigkeit kann durch Bisphenol A Verbindungen erhöht werden.

In den folgenden Beispielen werden bevorzugte Ausführungsformen des erfindungsgemäßen Klebstoffs, die anhand der angegebenen Rezepturen nach üblichen Verfahren hergestellt werden können, vorgestellt. Die Erfindung soll jedoch nicht auf die in den Beispielen genannten Rezepturen beschränkt werden.

Beispiel 1

Reaktionsklebstoff auf Polyesterurethan/ungesättiger Polyester/Präpolymer-Basis

| Mischung I: | |
|---|---|
| Desmocoll$^R$ 540 (Hydroxylgruppen enthaltendes Polyurethan) | 50,0 Gew.% |
| Palatal$^R$ M 610 (ungestättigter Polyester) | 45,0 |
| Bayferrox$^R$ 108 M (Fe$_2$O$_3$) | 5,0 |
| | $\overline{100}$ |
| Mischung II (Präpolymer): | |
| HEMA | 34,2 Gew.% |
| Desmodur$^R$ VK (Isocyanat) | 32,9 |
| Methylethylketon | 32,9 |
| | $\overline{100}$ |

Aus 40 Gew.Teilen der Mischung I wird mit 60 Gew.Teilen Methylethylketon eine Lösung hergestellt, die mit der Mischung II nach der folgenden Rezeptur versetzt und nach Rühren 24 Std. zum Ausreagieren gut verschlossen stehengelassen wird, wobei auf dem Polyurethan endständige Doppelbindungen ausgebildet werden. Anschließend wird die Reaktionslösung mit den zusätzlichen Gerüstpolymeren, ungesättigten Polyestern, Vernetzer, Peroxid, Katalysator und den weiteren Zusatzstoffen versetzt.

| Fertiger Klebstoff: | |
|---|---|
| Mischung I | 54,11 Gew.% |
| Mischung II (Präpolymer) | 8,00 |
| Vernetzer (Trimethylethylolpropantriacrylat) | 8,66 |
| Peroxidkatalysator (2,2-Bis(tert. butylperoxy)butan, Interox$^R$ BU-50-AL) | 2,60 |
| Roskydal$^R$ 850 W | 6,49 |
| Stabilisator (Hydrochinon) | 0,03 |
| ungesättigter Polyester (Haftharz LTH$^R$) | 20,11 |
| | $\overline{100}$ |

Der erhaltene Klebstoff zeichnet sich vor allem durch sehr gute Kerosinbeständigkeit aus.

Beispiel 2

Der unter Beispiel 1 hergestellte Klebstoff wurde zur Untersuchung seiner Eigenschaften einer Prüfung nach der VG-Norm 95343 und 95214 für die Verklebung von wärmeschrumpfenden Formteilen unterzogen.

Probenvorbereitung für die VG-Prüfungen

Das wärmeschrumpfende Formteil (Kabelumhüllungen aus strahlenvernetztem Polyethylen) wird innen an beiden Enden bis zu einer Tiefe von ca. 1 cm und einer Naßfilmstärke von 0,7 mm mit dem 65 %igen Klebstoff beschichtet. Anschließend läßt man bei Raumtemperatur bis 72 Std. trocknen. Zur Herstellung des Testkörpers wird das Formteil mit Heißluft IR Strahlung (Flamme oder im Wärmeofen bei Temperaturen von 150-450°C) erhitzt. Dabei läuft der Schrumpfprozeß ab. Das Formteil schmiegt sich um einen Aluminiumadapter und ein Kabel. Die dabei entstehenden Temperaturen zwischen Formteil und Aluminium, und Formteil und Kabel liegen bei ca. 120°C. Der Schrumpfvorgang dauert 3 Min.. Die auf diese Art vorbereiteten Proben werden 7 Tage bei Raumtemperatur gelagert und dann den Prüfungen unterworfen.

Norm:

VG-95214 T05: Prüfung von Verbindungen mit wärmeschrumpfendem Bauteil
VG-95343 T14: Verklebbarkeit von Bauteilegruppen,
Nato-Code: Chemikalienbeständigkeit

Prüfungsbefund siehe Tabelle

### Tabelle

| Prüfparameter | | Maßeinheit | Meßwerte | Sollwert |
|---|---|---|---|---|
| 1. Dyn. Scherkraft bei Temperatur- Beanspruchung | bei 23°C | N | 920 | > 300 |
| | bei 50°C | N | 562 | > 210 |
| | bei 70°C | N | 357 | > 150 |
| | bei 100°C | N | 282 | > 110 |
| 2. Statische Schwerkraft bei Temperaturbean- spruchung (Zugkraft) | bei 23°C | N | 850 | > 300 |
| | bei 50°C | N | 885 | > 300 |
| | bei 70°C | N | 828 | > 300 |
| | bei 100°C | N | 810 | > 300 |
| 3. Drehmoment | | N | 510 | > 300 |
| 4. Beständigkeit gegen Chemikalien (24h/70°C) | Prüfmittel-Nr./ Nato-Code | | | |
| | 1.2/ F- 40 | N | 251 | > 150 |
| | 1.4/ 0-156 | N | 483 | > 150 |
| | 1.6/ G-354 | N | 500 | > 150 |
| | 1.7/ H-515 | N | 450 | > 150 |
| | Wasser/ -- | N | 770 | > 150 |
| 5. Wärme- schock 4h/215°C | Schäl- festigk. Formt./Kabel | N/25mm | 136 | > 60 |
| | Formt./Adap. | N/25mm | 370 | > 60 |
| | Dyn.Scherkaft | N | 1435 | > 300 |
| 6. Wärme- alterung 168h/160°C | Schäl- festigk. Formt./Kabel | N/25mm | 135 | > 60 |
| | Formt./Adap. | N/25mm | 79 | > 60 |
| | Dyn.Scherkraft | N | 1435 | > 300 |
| 7. Biegsamkeit bei tiefen Temp. | | N | 662 | > 300 |
| 8. Schälfestigkeit Formt./Kabel | | N/25mm | 282 | > 60 |
| 9. Schälfestigkeit Formt./Adapter | | N/25mm | 354 | > 60 |

Die Meßwerte liegen bei allen Prüfparametern über den von der Norm geforderten Mindestwerten.

**Beispiel 3**

Rezeptur für die Innenbeschichtung von wärmeschrumpfenden Formteilen

| | |
|---|---|
| Elastomer (CM) | 17,0 Gew.% |
| ungesättigter Polyester (Roskydal[R]) | 18,0 |
| Vernetzer (Trimethylolpropantriacrylat) | 7,5 |
| Peroxid (2,2-bis(tert-Butyloxy)butan) | 1,3 |
| Füllstoff ($Fe_2O_3$ Bayferrox[R] 318) | 1,0 |
| Stabilisator (Beckopox[R] 140) | 0,3 |

Fortsetzung der Tabelle auf der nächsten Seite

(fortgesetzt)

| | |
|---|---|
| Lösungsmittel: Methylethylketon | 37,0 |
| Toluol | 17,9 |
| | 100 |

Die Lösung wird im Streich- oder Spritzverfahren auf die Wärmeschrumpfteile aufgetragen und das Lösungsmittel unter Vakuum abgezogen. Die Metalloberflächen oder Kunststoffoberflächen, auf die aufgeschrumpft werden soll, müssen fett-, öl- und staubfrei und evtl. aufgerauht sein. Beim Schrumpfvorgang wird das Formteil in einem Luftstrom zwischen 250 und 600°C auf dem Aluminiumadapter und dem Kabelmantel geschrumpft. Nach dem Erkalten sind die Teile manipulierfähig. Die Festigkeit nach 24 Std. führt zum Kohäsionsbruch.

Beispiel 4

Rezeptur für Verkleben von Wärmeschrumpfteilen auf Basis Polyesterurethan/ungesättigtem Polyester und Präpolymer

```
Elastomer (AU)                                  11,00 Gew.%
ungesättigter Polyester
     (Terephthalsäurebasis)                      9,80
Präpolymer MDI/HEMA                              8,80
Vernetzer (Trimethylolpropantriacrylat)         8,70
ungesättigter Polyester
     (Maleinsäure/Terephthalsäurebasis)         21,80
Schwarzpigment                                   1,80


Methylethylketon                                36,59
Peroxidkatalysator (2,2-bis(tert-
     Butylperoxy)butan)                          1,50
Stabilisator (Hydrochinon)                       0,01
                                                100
```

Beispiel 5

Bördelnahtklebstoff für Metallverbundmassen in der Automobilindustrie

| | |
|---|---|
| Gerüstpolymer (ACM) | 30,0 Gew.% |
| ungesättigter Polyester (Roskydal[R] 850 W) | 14,0 |
| Vernetzer (Trimethylolpropantriacrylat) | 5,0 |
| Vernetzer (Rütepox[R] Harz VE 3582) | 10,0 |
| Füllstoff (Kreide) | 30,0 |
| Weichmacher (Mesamoll) | 10,0 |
| Peroxidkatalysator (tert-Butylperbenzoat) | 1,0 |
| | 100 |

Die Scherfestigkeiten liegen bei 15 N/mm$^2$ bei Raumtemperatur. Durch die hohe Elastizität des Klebstoffs ist der Verbundwerkstoff ermüdungsfrei und gut kältebeständig.

Beispiel 6

Klebstoff für Front- und Heckscheibenverglasungen

Der Klebstoff nach der unten aufgeführten Formulierung wird als selbstklebendes Band mit einer Siliconpapierabdeckung auf die Emailschicht der Scheibe aufgetragen. Anschließend wird die Siliconpapierabdeckung abgezogen und die Scheibe auf die Karosserie aufgelegt. Dann wird durch Hitze vernetzt. Eventuell kann vor dem Auflegen durch UV- oder Elektronenstrahl vorbehandelt werden. Eine Behandlung der frischen Lackflächen ist meist nicht nötig.

| | |
|---|---|
| Gerüstpolymer (ECO) | 40,0 Gew.% |
| ungesättigter Polyester (Crystic[R] 198) | 12,0 |
| ungesättigter Polyester (Roskydal[R] 850 W) | 8,0 |
| Vernetzer (Trimethylolpropantriacrylat) | 5,0 |
| Vernetzer (Ethylentriglycolmethacrylat) | 15,0 |
| Füllstoff (Kreide) | 13,0 |
| Pigment (Titandioxid) | 2,0 |
| Silan (Silicon Finish[R] GF 92 von Wacker) | 3,0 |
| Peroxidkatalysator (tert-Butylperbenzoat) | 2,0 |
| | 100 |

Die Beständigkeit dieses Klebstoffs gegenüber Ozon, UV und Wasser ist gut.

Beispiel 6a

Klebstoff zur Verbindung von Kautschukauskleidungen (Hart- oder Weichgummi) auf sandgestrahltem Stahl im Säureschutzbau (z.B. bei Gaswaschanlagen in Verbrennungsanlagen)

Der lösungsmittelhaltige, nach der Austrocknung selbstklebende, wärmereagierende Klebstoff wird auf den Stahl aufgetragen. Nach dem Trocknen werden die Kautschukauskleidungen in den Klebstoff eingewalzt. Die Vernetzung erfolgt während der Vulkanisation. Die Haftfestigkeiten liegen über den Kohäsionswerten der Gummiauskleidungen, wobei eine sehr hohe chemische Beständigkeit gegeben ist.

| | |
|---|---|
| Gerüstpolymer (XNBR, z.B. Hycar[R] 1072) | 10,0 Gew.% |
| ungesättigter Polyester (Crystic[R] 198) | 2,0 |
| Vernetzer (Actocryl[R] 400) | 8,0 |
| Pigment (Titandioxid) | 8,0 |
| Ruß | 2,0 |
| Peroxidkatalysator (tert-Butylperbenzoat) | 1,0 |
| Methylethylketon/Ethylacetat 1:1 | 69,0 |
| | 100 |

Beispiel 7

Herstellung von Coil Coating

Zur Zeit werden im Coil-Coating-Verfahren Vernetzungstemperaturen von 180°C und darüber benötigt, um die handelsüblichen Klebstoffe zu trocknen und zu vernetzen. Die aufgeführte Rezeptur kann bei 140°C zur Reaktion gebracht werden.

| | |
|---|---|
| Gerüstpolymer (AU, z.B. Desmocoll[R] 530) | 12,0 Gew.% |
| ungesättigter Polyester (Viapal[R] 495 G) | 8,0 |
| Vernetzer (PLEX 6601 von Röhm) | 6,0 |
| Peroxidkatalysator (tert-Butylpermaleinat) | 0,4 |

Fortsetzung der Tabelle auf der nächsten Seite

(fortgesetzt)

| Methylethylketon/Ethylacetat 1:1 | 73,6 |
|---|---|
| | 100 |

## Beispiel 8

Reaktionsschmelzklebstoffe, allgemeine Anwendung

Dieser Klebstoff wird aus der Schmelze mit 70 bis 80°C aufgetragen. Die Vernetzung erfolgt bei Temperaturen über 120°C.

Mit diesem Klebstoff können poröse Materialien, Metalle, Glas, Keramik, vernetzte und unvernetzte Kunststoffe (allerdings kein unbehandeltes Polyethylen oder Polypropylen) untereinander oder gegeneinander verklebt werden.

| Gerüstpolymer (CN) | 6,0 Gew.% |
|---|---|
| ungesättigter Polyester (Haftharz LTH$^R$) | 40,0 |
| ungesättigter Polyester (Roskydal$^R$ 850 W) | 45,0 |
| Vernetzer (Trimethylolpropantriacrylat) | 5,0 |
| Peroxidkatalysator (Interox® BU-50-AL, d.h. 2,3-Bis(tert. butylperoxy)butan) | 4,0 |
| | 100 |

## Patentansprüche

1. Wärmehärtbarer Reaktionsklebstoff als lagerstabiles Einkomponentensystem, enthaltend jeweils mindestens

    a) ein ungesättigtes Gerüstpolymer auf Basis eines unvernetzten Elastomers in einem Anteil von 5 bis 90 Gew.%,
    b) einen ungesättigten Polyester in einem Anteil von 5 bis 90 Gew.%,
    c) einen ungesättigten Vernetzer in einem Anteil von 0,1 bis 50 Gew.%,
    d) einen radikalspendenden Härtungskatalysator in einem Anteil von 0,2 bis 6 Gew.% ausgewählt aus
    tert.Butylperbenzoat
    tert-Butylpermaleat
    Bis(tert-butylperoxyisopropyl)benzol
    1,1-Di(tert-butylperoxy)-3,3,5-trimethylcyclohexan n-Butyl-4,4-di(tert-butylperoxa)valerat
    Ethyl-3,3-di(tert-butylperoxy)butyrat
    3,3,6,6,9,9-Hexamethyl-1,2,4,5-tetraoxacyclohexan
    2,2-Bis(tert-butylperoxy)butan
    1,1-Bis(tert-butylperoxy)cyclohexan
    e) gegebenenfalls weitere Zusatzstoffe.

2. Klebstoff nach Anspruch 1, worin das ungesättigte Gerüstpolymer das Reaktionsprodukt von einem Hydroxylgruppen enthaltendem Elastomer mit einem Diisocyanat ist.

3. Klebstoff nach Anspruch 1, worin der ungesättigte Polyester aus ungesättigten mehrbasischen Carbonsäuren oder Kombinationen von ungesättigten/gesättigten mehrbasischen Carbonsäuren, umgesetzt mit mehrwertigen Alkoholen, aufgebaut ist.

4. Klebstoff nach Anspruch 1, worin der Vernetzer eine zweioder mehrfunktionelle Acrylatverbindung oder deren Derivat, ein ungesättigter Hydroxyester, eine Aminoamidverbindung, Ethermonoester, Glycidylester, Oligomer von PU, EP, UP und Melamin ist.

5. Klebstoff nach Anspruch 4, der zusätzlich monofunktionelle Acrylatverbindungen enthält.

6. Klebstoff nach Anspruch 1, der als Zusatzstoff $Fe_2O_3$ enthält.

7. Klebstoff nach Anspruch 1, der als Zusatzstoffe Füllstoffe, Pigmente, Ruß und/oder Weichmacher enthält.

EP 0 530 402 B1

8. Klebstoff nach Anspruch 1, der als Zusatzstoff einen oder mehrere Aktivatoren enthält.

9. Klebstoff nach Anspruch 1, der als Zusatzstoff einen oder mehrere Stabilisatoren enthält.

10. Klebstoff nach einem der Ansprüche 1 bis 9, worin der Klebstoff in einem Lösungsmittel gelöst ist, und/oder als Folie, Film, Platte, Paste, Band mit oder ohne Träger/Seele vorliegt.

11. Klebstoff nach einem der vorhergehenden Ansprüche 1 bis 10, der mindestens zwei Jahre bei Raumtemperatur abgepackt bei freiem Sauerstoffzutritt lagerstabil ist.

12. Verwendung des Klebstoffs nach einem der vorhergehenden Ansprüche 1 bis 11 zur Verklebung von wärmeschrumpfenden Formteilen aus vernetztem Polyethylen gegen Metall oder gegen sich selbst.

Claims

1. Heat-curable reaction adhesive as storage-stable single-component system containing in each case at least

a) one unsaturated structural polymer based on a non-crosslinked elastomer in a proportion of 5 to 90 wt.%,
b) one unsaturated polyester in a proportion of 5 to 90 wt.%,
c) one unsaturated crosslinker in a proportion of 0.1 to 50 wt.%,
d) one free radical-donating curing catalyst in a proportion of 0.2 to 6 wt.% selected from
tert.-butylperbenzoate
tert.-butylpermaleate
bis(tert.-butylperoxyisopropyl)benzene
1,1-di(tert.-butylperoxy)-3,3,5-trimethylcyclohexane n-butyl-4,4-di(tert.-butylperoxy)valerate
ethyl-3,3-di(tert.-butylperoxy)butyrate
3,3,6,6,9,9-hexamethyl-1,2,4,5-tetraoxacyclohexane
2,2-bis(tert.-butylperoxy)butane
1, 1-bis(tert.-butylperoxy)cyclohexane
e) optionally further additives.

2. Adhesive according to claim 1, wherein the unsaturated structural polymer is the reaction product of an elastomer containing hydroxyl groups with a diisocyanate.

3. Adhesive according to claim 1, wherein the unsaturated polyester is composed of unsaturated polybasic carboxylic acids or combinations of unsaturated/saturated polybasic carboxylic acids reacted with polyhydric alcohols.

4. Adhesive according to claim 1, wherein the crosslinker is a bifunctional or polyfunctional acrylate compound or derivative thereof, an unsaturated hydroxy ester, an aminoamide compound, ether monoester, glycidyl ester, oligomer of PU, EP, UP and melamine.

5. Adhesive according to claim 4, which additionally contains monofunctional acrylate compounds.

6. Adhesive according to claim 1, which contains $Fe_2O_3$ as additive.

7. Adhesive according to claim 1, which contains fillers, pigments, carbon black and/or plasticisers as additives.

8. Adhesive according to claim 1, which contains one or more activators as additive.

9. Adhesive according to claim 1, which contains one or more stabilisers as additive.

10. Adhesive according to one of claims 1 to 9, wherein the adhesive is dissolved in a solvent, and/or exists as a foil, film, sheet, paste, tape with or without support/core.

11. Adhesive according to one of the preceding claims 1 to 10, which is storage-stable for at least two years at room temperature when packed under free oxygen access.

12. Use of the adhesive according to one of the preceding claims 1 to 11 for adhering heat-shrinking mouldings of crosslinked polyethylene to metal or to itself.

**Revendications**

1. Colle à réaction thermodurcissable sous la forme d'un système à un seul constituant stable au stockage, contenant chaque fois au moins :

   a) un polymère de squelette insaturé à base d'un élastomère non réticulé dans une proportion de 5 à 90 % en poids,
   b) un polyester insaturé dans une proportion de 5 à 90 % en poids,
   c) un agent de réticulation insaturé dans une proportion de O,1 à 50 % en poids,
   d) un catalyseur de durcissement radicalaire dans une proportion de 0,2 à 6 % en poids, choisi parmi
   le perbenzoate de t-butyle,
   le permaléate de t-butyle
   le bis(tert-butylperoxyisopropyl)benzène,
   le 1,1-di(tert-butylperoxy)-3,3,5-triméthylcyclohexane,
   le 4,4-di(tert-butylperoxy)valérate de n-butyle,
   le 3,3-di-tert-butylperoxy)butyrate d'éthyle,
   le 3,3,6,6,9,9-hexaméthyl-1,2,4,5-tétraoxacyclohexane
   le 2,2-bis(tert-butylperoxy-butane,
   le 1,1-bis(tert-butylperoxy)cyclohexane,
   e) le cas échéant d'autres additifs.

2. Colle selon la revendication 1, dans laquelle le polymère de squelette insaturé est le produit de la réaction d'un élastomère contenant des groupes hydroxyle avec un diisocyanate.

3. Colle selon la revendication 1, dans laquelle le polyester insaturé est constitué à partir d'acides polycarboxyliques insaturés ou d'associations d'acides polycarboxyliques insaturés/saturés, mis à réagir avec des polyalcools.

4. Colle selon la revendication 1, dans laquelle l'agent de réticulation est un acrylate bifonctionnel ou d'une fonctionnalité supérieure, ou un de ses dérivés, un hydroxyester insaturé, un composé aminoamidé, un éther monoester, un ester glycidylique, un oligomère de PU, EP, UP et de mélamine.

5. Colle selon la revendication 4, qui contient en outre des acrylates monofonctionnels.

6. Colle selon la revendication 1, qui contient comme additif $Fe_2O_3$.

7. Colle selon la revendication 1, qui contient comme additif des charges, des pigments, du noir de fumée et/ou des plastifiants.

8. Colle selon la revendication 1, qui contient comme additif un ou plusieurs activateurs.

9. Colle selon la revendication 1, qui contient comme additif un ou plusieurs stabilisants.

10. Colle selon l'une des revendications 1 à 9, dans laquelle la colle est dissoute dans un solvant et/ou sous forme de feuille, de film, de plaque, de pâte, de ruban avec ou sans support/âme.

11. Colle selon l'une des revendications 1 à 1O précédentes, qui, emballée pendant au moins deux ans à la température ambiante avec accès libre de l'oxygène, est stable au stockage.

12. Utilisation de la colle selon l'une des revendications 1 à 11 précédentes pour le collage de pièces moulées en polyéthylène réticulé se contractant à la chaleur sur des métaux ou sur elles-mêmes.